# FASCICULE DE BREVET EUROPEEN

(11) **EP 0 701 470 B1**
(45) Date de publication et mention de la délivrance du brevet: **13.01.1999**
(21) Numéro de dépôt: 95915221.6
(22) Date de dépôt: 29.03.1995
(51) Int. Cl.: B01D 53/047

(54) **PROCEDE DE PRODUCTION D'UN GAZ PAR ADSORPTION**
VERFAHREN ZUR HERSTELLUNG EINES GASES MITTELS ADSORPTION
METHOD FOR PRODUCING A GAS BY ADSORPTION

(30) Priorité: 30.03.1994 FR 9403782
(43) Date de publication de la demande: 20.03.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: MAROT, Christine, F-78530 BUC (FR); PETIT, Pierre, F-78530 Buc (FR); VIGOR, Xavier, F-75015 PARIS (FR)
(74) Mandataire: Mercey, Fiona Susan
(86) Numéro de dépôt international: FR9500396
(87) Numéro de publication internationale: WO9526805

(56) Documents cités:
- EP-A- 0 248 720
- EP-A- 0 350 373
- EP-A- 0 356 861

## Description

La présente invention concerne un procédé de production d'un gaz moins aisément adsorbable d'un mélange gazeux par adsorption dans une unité d'adsorption comprenant trois adsorbeurs et mettant en oeuvre, pour chaque adsorbeur, un cycle comportant les étapes suivantes :
a) production sensiblement isobare à pression haute du cycle dudit gaz;
b) dépressurisation initiale avec sortie de gaz à co-courant jusqu'à une pression intermédiaire;
c) dépressurisation finale avec sortie de gaz à contre-courant jusqu'à une pression basse de cycle;
d) élution avec admission à contre-courant de gaz sorti à contre-courant d'un autre adsorbeur en étape b); et
e) recompression jusqu'à la pression haute de cycle uniquement par du gaz de production introduit à contre-courant.

De tels cycles, développés à partir d'un cycle de base décrit dans le document US-A-3 176 444 et comportant une étape d'élution assez longue, sont utilisés en particulier pour la production d'oxygène de moyenne pureté à partir d'air.

La présente invention a pour objet de proposer un nouveau procédé permettant, sans aucun investissement supplémentaire et par simple modification du programme de commande de cycle, d'obtenir des performances sensiblement améliorées avec une réduction sensible de la consommation d'énergie spécifique, en particulier pour la production d'oxygène de pureté supérieure à 90 %.

Pour ce faire, selon une caractéristique de l'invention, l'étape b) de dépressurisation initiale comprend une sous-étape b₂, précédant l'étape c), où la dépressurisation s'effectue également avec sortie de gaz à contre-courant, l'étape d'élution d) étant suivie d'une étape de recompression f) à contre-courant avec du gaz sorti à co-courant d'un autre adsorbeur en sous-étape b₂.

Selon d'autres caractéristiques de l'invention :
- la pression basse de cycle est inférieure à la pression atmosphérique, typiquement inférieure à 0,5 x 10⁵ Pa, la pression de cycle étant typiquement légèrement supérieure à la pression atmosphérique;
- le soutirage à contre-courant dans les étapes b₂, c) et d) est effectué par pompage.

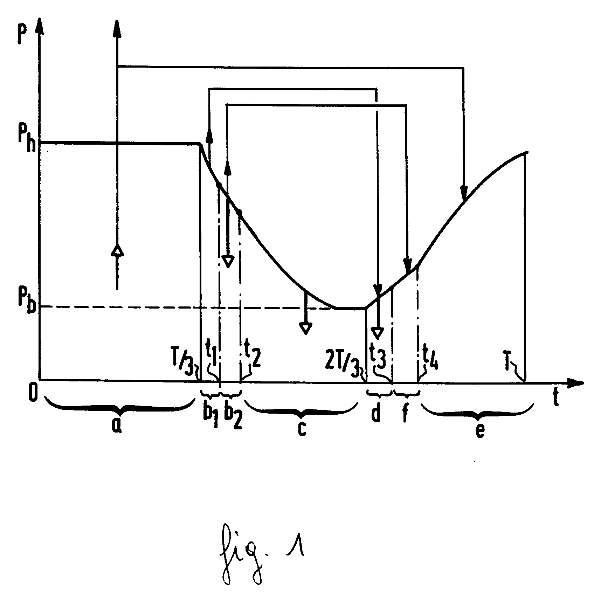

D'autres caractéristiques et avantages de la présente invention ressortiront de la description suivante d'un mode de réalisation donné à titre illustratif mais nullement limitatif, faite en relation avec le dessin annexé, sur lequel :
- la planche unique représente schématiquement dans un diagramme pression/temps, un cycle d'un procédé selon l'invention.

Dans la description qui va suivre, l'expression "co-courant" signifie dans le même sens que la circulation de fluide en phase de production, l'expression "contre-courant" signifiant dans le sens inverse du précédent.

Le cycle représenté sur la figure unique correspond à une installation de production d'oxygéne moyenne pureté comprenant trois adsorbeurs dont les entrées sont sélectivement connectables à une soufflante de fourniture de mélange gazeux à séparer et à au moins une pompe à vide servant aux phases de décompression et d'élution pour la régénération de l'adsorbant.

Comme on le voit sur la figure unique, un cycle T comporte les étapes suivantes :
a) de t = zéro jusqu'à T/3, une étape de production sensiblement isobare à pression haute du cycle Pₕ d'oxygène disponible en sortie de l'adsorbeur alimenté en son entrée par de l'air à une pression Pₕ;
b₁) de T/3 à t₁, la sortie de l'adsorbeur à la pression haute du cycle est fermée et sa sortie est reliée à la sortie d'un autre adsorbeur se trouvant à la pression basse du cycle P_{b} dont l'entrée est reliée à la pompe à vide, l'élution à contre-courant, de 2T/3 à t₃, dans cet autre adsorbeur y provoquant une première recompression.
b₂) de t₁ à t₂, les sorties des deux adsorbeurs en question demeurent communicantes, mais la décompression du premier adsorbeur s'effectue ici également par soutirage à contre-courant par connexion de son entrée à la pompe à vide qui est simultanément déconnectée après t₃, de l'autre adsorbeur qui continue, jusqu'à t₄, sa recompression à contre-courant par du gaz pur provenant, comme sus-mentionné, du premier adsorbeur;
c) de t₂ à 2T/3, étape finale de décompression du premier adsorbeur jusqu'à la pression basse du cycle P_{b}, effectuée uniquement par l'action de la pompe;
d) de 2T/3 à t₃, élution/recompression par du produit pur en provenance d'un autre adsorbeur en début de phase de décompression avec soutirage simultané par la pompe (étape b₁) vue précédemment);
f) de t₃ à t₄, recompression à contre-courant par du produit pur provenant de l'autre adsorbeur en étape b₂); et
e) de t₄ à T, recompression jusqu'à la pression haute du cycle P_{b}) par du produit pur prélevé sur la production.

On a représenté dans le tableau ci-dessous les résultats comparatifs obtenus avec une même installation de trois adsorbeurs remplis avec de la zéolithe type 5A, 13X ou CaX, réalisant un cycle dont la pression haute Pₕ est de 1,1 x 10⁵ Pa abs. et la pression basse P_{b} de 0,31 x 10⁵ Pa abs., pour un temps de cycle total de 3 x 30 secondes, A correspondant à un cycle défini au début de la description et B, à un cycle selon l'invention, le rendement étant défini par le rapport : quantité d'oxygène produite/quantité d'oxygène consommée.

| **Teneur O**_{**2**} | **Rendement %** |
|---|---|
| 88 % | A : 50 % |
| | B : 52 % |
| 92 % | A : 47 % |
| | B : 51 % |
| 94,8% | A : 37% |
| | B : 45 % |

Selon un aspect de l'invention, les étapes de production et de dépressurisation par aspiration sont déterminées de façon que les moyens de compression du mélange gazeux d'une part, et les moyens de pompage d'autre part, fonctionnent en continu. Ainsi, comme dans l'exemple représenté, pour une unité à n adsorbeurs et un temps de cycle T, la durée du total des étapes b₂), c) et d) d'une part, et a), d'autre part, est égale à k x T/n, k étant un nombre entier supérieur ou égal à 1.

## Revendications

1. Procédé de production d'un gaz moins aisément adsorbable d'un mélange gazeux par adsorption dans une unité d'adsorption comprenant trois adsorbeurs et mettant en oeuvre, pour chaque adsorbeur, un cycle comportant les étapes suivantes :
a) production sensiblement isobare à une pression haute du cycle (Pₕ) dudit gaz;
b) dépressurisation initiale avec sortie de gaz à co-courant jusqu'à une pression intermédiaire;
c) dépressurisation finale avec sortie de gaz à contre-courant jusqu'à une pression basse de cycle (P_{b});
d) élution avec admission à contre-courant de gaz sorti à co-courant d'un autre adsorbeur en étape b); et
e) recompression jusqu'à la pression haute (Pₕ) du cycle uniquement par du gaz de production introduit à contre-courant,
caractérisé en ce que l'étape de dépressurisation initiale b) comprend une sous-étape b₂), précédant l'étape c), où la dépressurisation s'effectue également avec sortie de gaz à contre-courant, l'étape d'élution d) étant suivie d'une étape de recompression f) à contre-courant avec du gaz sorti à cocourant d'un autre adsorbeur en sous-étape b₂).

2. Procédé selon la revendication 1, caractérisé en ce que la pression basse du cycle (P_{b}) est inférieure à la pression atmosphérique.

3. Procédé selon la revendication 2, caractérisé en ce que la pression basse (P_{b}) est inférieure à 0,5 x 10⁵ Pa abs.

4. Procédé selon l'une des revendications précédentes, caractérisé en ce que la dépressurisation à contre-courant dans les étapes b₂), c) et d) est effectuée par pompage.

5. Procédé selon l'une des revendications 2 à 4, caractérisé en ce que la pression haute du cycle (Pₕ) est légèrement supérieure à la pression atmosphérique.

6. Procédé selon l'une des revendications 1 à 5, dans une unité d'adsorption comportant à n adsorbeurs, caractérisé en ce que la durée du total des étapes b₂), c) et d) est égale à k x T/n, T étant la durée totale et k un nombre entier supérieure ou égal à 1.

7. Procédé selon la revendication 6, caractérisé en ce que la durée de l'étape a) est égale à k x T/n.

8. Procédé selon l'une des revendications précédentes, caractérisé en ce que le gaz est de l'oxygène et le mélange gazeux, l'air.

## Claims

1. Process for producing a less easily adsorbable gas from a gaseous mixture by adsorption in an adsorption unit comprising three adsorbers and putting into operation, for each adsorber, a cycle including the following steps :
a) substantially isobaric production at a high cycle pressure (Pₕ) of the said gas;
b) initial depressurization with gas leaving cocurrently to an intermediate pressure;
c) final depressurization with gas leaving countercurrently to a low cycle pressure (P_{b});
d) elution with countercurrent introduction of gas leaving cocurrently from another adsorber in step b); and
e) recompression to the high cycle pressure (Pₕ) solely by production gas introduced countercurrently,
characterized in that the initial depressurization step b) includes a sub-step b₂), preceding step c), where depressurization is also carried out with gas leaving countercurrently, the elution step d) being followed by a recompression step f) countercurrently with gas leaving cocurrently from another adsorber in sub-step b₂).

2. Process according to claim 1, characterized in that the low cycle pressure (P_{b}) is lower than atmospheric pressure.

3. Process according to claim 2, characterized in that the low pressure (P_{b}) is lower than 0.5 × 10⁵ Pa abs.

4. Process according to one of the preceding claims, characterized in that the countercurrent depressurization in steps b₂), c) and d) is achieved by pumping.

5. Process according to one of claims 2 to 4, characterized in that the high cycle pressure (Pₕ) is slightly above atmospheric pressure.

6. Process according to one of claims 1 to 5, in an adsorption unit comprising n adsorbers, characterized in that the total duration of steps b₂), c and d is equal to k × T/n, T being the total duration and k a whole number greater than or equal to 1.

7. Process according to claim 6, characterized in that the duration of step a) is equal to k × T/n.

8. Process according to one of the preceding claims, characterized in that the gas is oxygen and the gaseous mixture air.

## Patentansprüche

1. Verfahren zur Gewinnung eines weniger leicht adsorbierbaren Gases aus einem Gasgemisch mittels Adsorption in einer Adsorbtionseinheit, die drei Adsorber umfaßt, wobei für jeden Adsorber ein Zyklus genutzt wird, der folgende Schritte umfaßt:
a) etwa isobare Gewinnung des Gases bei einem hohen Druck (Pₕ) des Zyklus;
b) anfängliche Druckminderung bis zu einem mittleren Druck mit Gasaustritt im Mitstrom;
c) abschließende Druckminderung bis zu einem niedrigen Druck (P_{b}) des Zyklus mit Gasaustritt im Gegenstrom;
d) Elution mit Eintritt von Gas im Gegenstrom, das aus einem anderen Adsorber im Schritt b) im Mitstrom austritt; und
e) Nachverdichten bis auf den hohen Druck (Pₕ) des Zyklus außschließlich durch das im Gegenstrom eingeleitete Produktionsgas,
dadurch gekennzeichnet, daß der anfängliche Druckminderschritt b) einen dem Schritt c) vorausgehenden Zwischenschritt b₂) umfaßt, bei dem sich der Druck ebenfalls mit gegenstromartigem Gasaustritt mindert, wobei der Elutionsschritt d) einem Schritt f) folgt, bei dem mit dem Gas im Gegenstrom nachverdichtet wird, das im Schritt b₂) aus einem anderen Adsorber im Mitstrom austritt.

2. Verfahren nach Anspruch 1, dadurch gekennzeichnet, daß der niedrige Druck P_{b}) des Zyklus unter dem Atmosphärendruck liegt.

3. Verfahren nach Anspruch 1, dadurch gekennzeichnet, daß der niedrige Druck P_{b}) unter 0,5 x 10⁵ Pa abs liegt.

4. Verfahren nach einem der vorstehenden Ansprüche, dadurch gekennzeichnet, daß die gegenstromartige Druckminderung in den Schritten b₂), c) und d) mittels Pumpen bewirkt wird.

5. Verfahren nach einem der Ansprüche 2 bis 4, dadurch gekennzeichnet, daß der hohe Druck (Pₕ) des Zyklus leicht über dem Atmosphärendruck liegt.

6. Verfahren nach einem der Ansprüche 1 bis 5, durchgeführt in einer bis zu n Adsorber umfassenden Adsorptionseinheit, dadurch gekennzeichnet, daß die Dauer der Gesamtheit der Schritte b₂), c) und d) gleich k x T/n ist, wobei T die Gesamtdauer und k eine ganze Zahl größer oder gleich 1 ist.

7. Verfahren nach Anspruch 6, dadurch gekennzeichnet, daß die Dauer des Schritts a) gleich k x T/n ist.

8. Verfahren nach einem der vorstehenden Ansprüche, dadurch gekennzeichnet, daß das Gas Sauerstoff und das Gasgemisch Luft ist.
